# EUROPEAN PATENT APPLICATION

(11) **EP 0 885 558 A1**
(43) Date of publication of application: **23.12.1998**
(21) Application number: 98304788.7
(22) Date of filing: 17.06.1998
(51) Int. Cl.: A01K 1/035, A47C 27/08

(54) **Veterinary treatment device**

(30) Priority: 17.06.1997 GB 9712783; 12.09.1997 GB 9719534
(71) Applicant: Brocher, Elvira, Isleworth, Middlesex TW7 4PF (GB)
(72) Inventor: Brocher, Elvira, Isleworth, Middlesex TW7 4PF (GB)
(74) Representative: Baillie, Iain Cameron

(57) **Abstract**

A veterinary treatment device for small animals comprises a base (10,61) with a liquid filled heatable structure (13,14,62,76) disposed on it. This structure is preferably two or more liquid (water) filled tubes (62). Covers (19) are provided over the structure and a cage can surround the device which cage can support a cover. The structure provides a means of supporting animals in a controlled environment.

## Description

This invention relates to veterinary treatment devices particularly for small animals.

In the treatment of small animals, particularly following veterinary operations, there is a need for a device which can assist in keeping an animal warm and provide a soft surface. The use of heating pads on the base of a veterinary cage does provide the necessary warmth but these can be difficult to control and if covered with a soft spongy or springy surface this latter can act as an insulating layer between the heating pad and the animal and militate therefore against the efficiency of the heating pad.

Water beds have been suggested for animal use in relation to cows but primarily for the purpose of providing a more resilient surface to avoid injury to the cow and not in the context of small animal veterinary use.

Accordingly to the present invention there is provided a veterinary device comprising a rigid base and a warmable liquid, preferably water, filled bed unit disposed over the base. A heating element can be incorporated into the bed but it is usually simpler to provide a heating element or pad which could be placed on the base beneath the bed structure. The heater can also be incorporated into the base. The heating pad is usually operated off a 24 volt transformer to provide safety in operation. The heating pad can be controlled by a thermostat placed in or adjacent to the bed with possibly a second thermostat placed adjacent to the construction to measure ambient temperatures. For most pets the thermostat can be set at to maintain at 38.3°C (101°F). If necessary the base can be provided with sides which in turn can also be provided with resilient protective members and a covering can be provided which will encompass the whole of the device which could be readily cleaned. Such a device can be placed in an animal cage but in a particularly desirable form of the invention there is provided a cage structure for veterinary treatment of small animals in which a water bed base or tray with heating pad and water bed element as discussed above is placed within a collapsible cage. In a specific form a vinyl inner sleeve is provided which protects the cage and the water bed construction and which can be readily removed.

For veterinary purposes the use of a single bag structure for the water bed is undesirable as being too soft. The preferable construction comprises a series of at least two parallel tubes. Such a construction would be inappropriate for a water bed for humans or large animals but has proved to be practical and advantageous for the present purposes. Such tubes can be simple unconnected tubes placed side-by-side or can be joined by webs located along the sides of the tubes to form a unitary structure.

The tubes can contain baffles (for example foam baffles formed from, for instance, polyurethane closed pore foam), which prevent water displacement to provide superior support for the animal to that achieved by a conventional water bed.

The liquid in the bed is most usually water since this is most convenient for filling and re-filling. However, other inert liquids could be employed.

Even when the heater is not in operation the liquid filled bed structure can provide a controlled environment for example a cool bed for animals with cardiovascular disorders or other conditions which are adversely affected by hot weather.

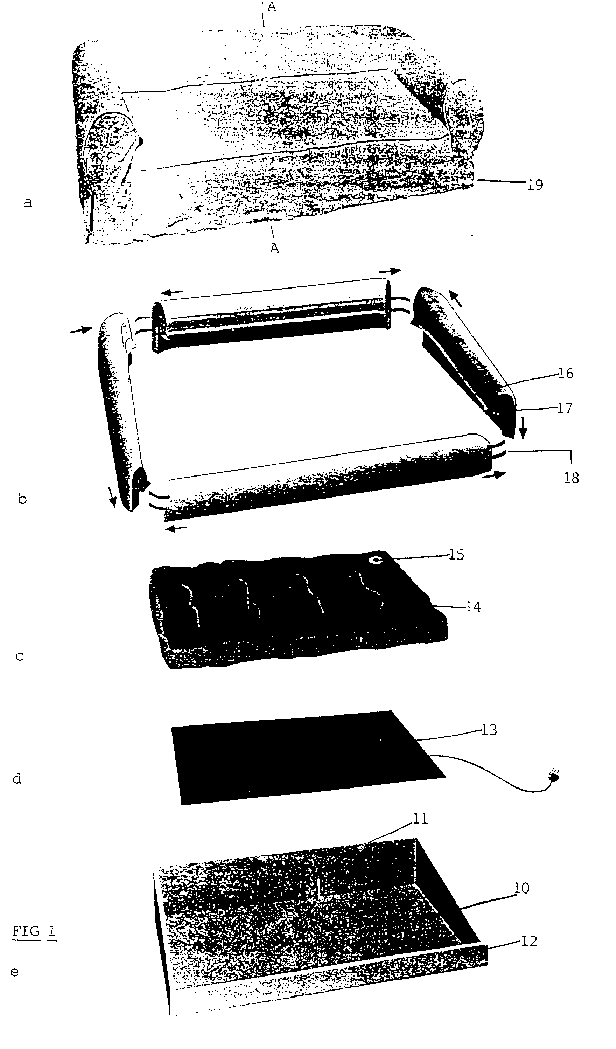

The invention will now be described with particular reference to the accompanying drawings in which:-
Figure 1 is an exploded view of a water bed in accordance with the invention;

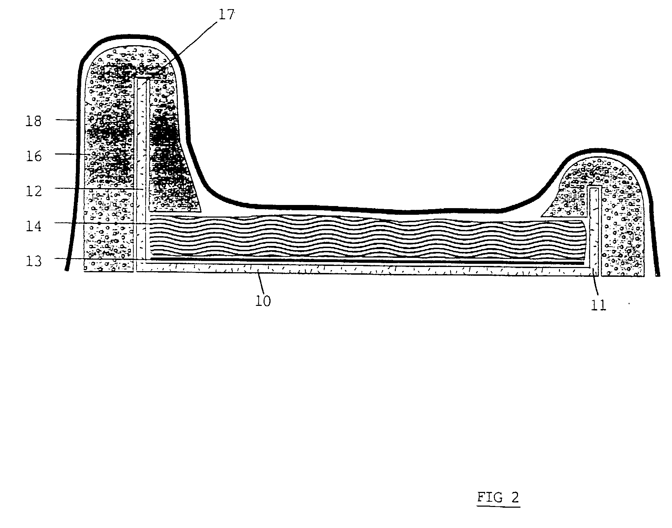

Figure 2 is a cross-section on the line AA of Figure 1;
Figures 3 to 7 show a veterinary recovery device with cage embodying the invention.

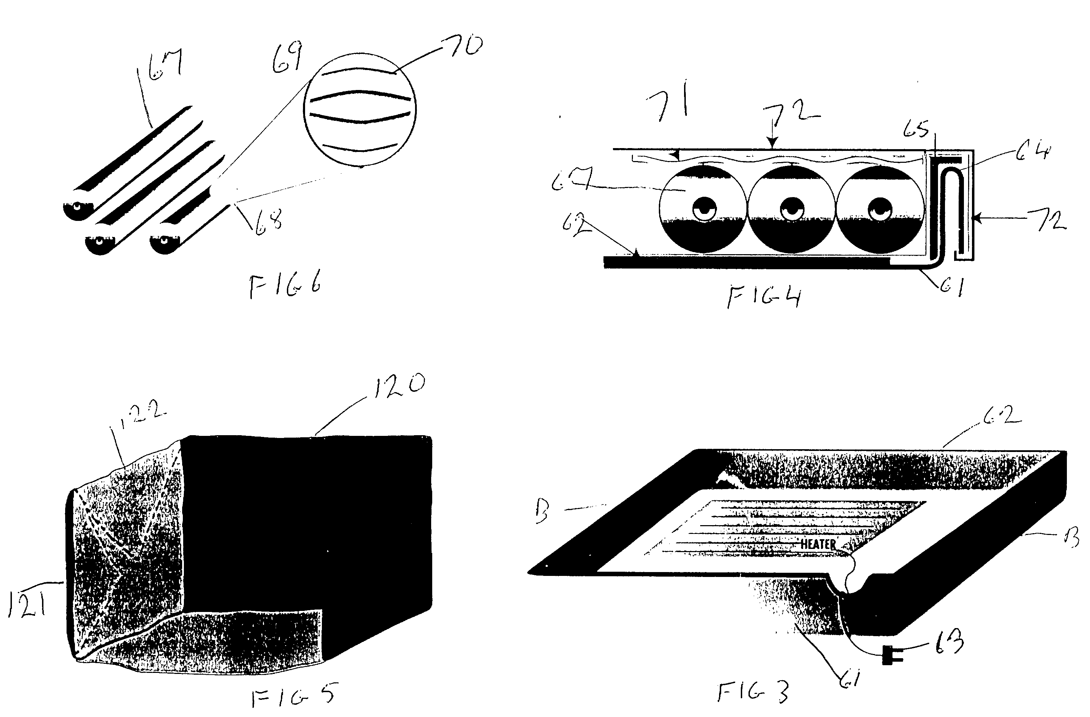

Figure 3 shows the rigid base and heater.

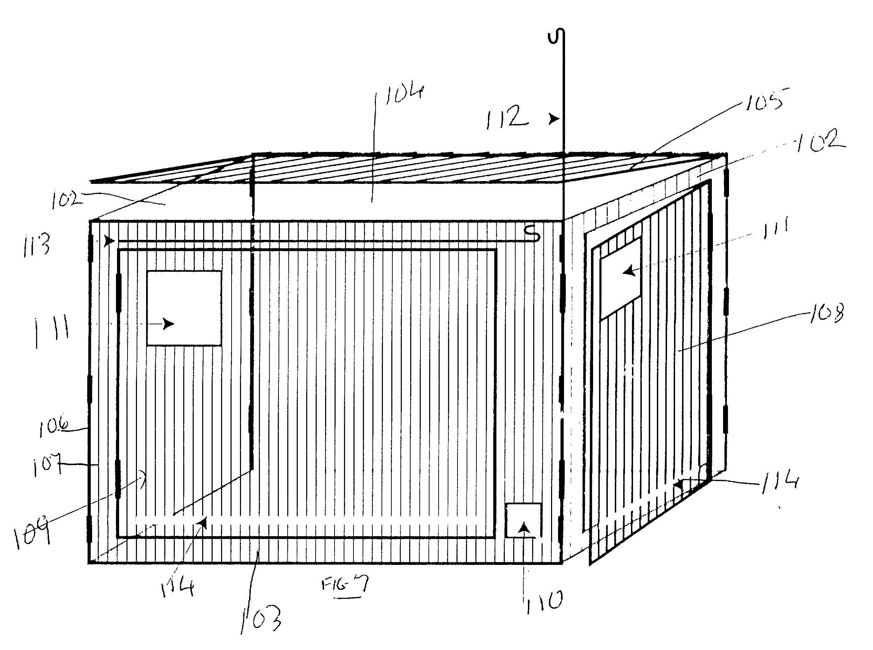

Figure 4 is a cross section along line BB of the device shown in Figure 3. Other components of the invention not shown in Figure 3 are present in Figure 4.
Figure 5 shows the cage inner sleeve.
Figure 6 shows the cylindrical water support means (partly shown in cross sectional form and exploded form).
Figure 7 shows the cage.

In a first form of the invention there is provided a water bed container or base 10 with side walls the rear wall 11 being higher than front wall 12. In this space is placed a conventional heating pad 13 which can be equipped with timers, thermostats etc. Placed on this heating pad is a water bed 14. This water bed can be constructed of an appropriate strength of water containing material such as rubber or thick polymer sheet and is provided with a filling point 15. Preferably the material is a hypo-allergenic vinyl which cannot be penetrated by mites and is easy to clean. The water bed can be a simple bag construction or could have internal members such as cellular construction by which flow of liquid within the bed can be controlled. Protective arm members 16 are provided with slots 17 which allow them to be placed on the edges of the tray, the arms being held together by straps 18 including Velcro (T.M.) straps. A cover 19 can be provided over the whole construction.

Such a cover or top blanket can have an elasticated base for neat fitting over the base. It should be a material which is easily washable, preferably machine washable at 60°C, to enable any fleas or mites to be killed. A polyester can be used. One very suitable material is a quilted material with at head only metallised surface, the core being quilted cotton/polyester.

In the cage structure embodiment as shown in Figure 3 the base 61 and the heater 62 are similar to the respective means described in the previous embodiment except the side walls of the base may be of even height. In use the respective base and heater are in similar spaced relationship to each other as disclosed in the first embodiment. Power line 63 to the heater 62 can be connected to a thermostat control and transformer.

As shown in Figure 4, the side wall of the base can have a curved lip 64 to extend over the edges in the cage. Foam safety edge members 65 comprise side members inwardly of the base sides and extend down the inner side walls of the base to near the floor of the base.

An extra liner preferably of vinyl 66 can be provided for easy cleaning and extends from near the lower edge of the outside wall of the base upwardly and over the top of base edge 64 and side members 65. It then can extend downwardly over the side members and along the inside walls of the base over the heater 62.

A multipiece water bed is provided on top of liner 66. The water bed comprises at least two of water filled resilient cylinders 67. Each cylinder is provided with a filling point (not shown) and has flexible walls.

In Figure 6 are shown separate drawings of the water filled resilient cylinders 67. A partial cross section is shown at 68 and an exploded view is shown at 69. It can be seen that in preferred embodiments baffles 70 of foam materials are provided extending longitudinally along the tubes to control the flow of water within the cylinders providing even water distribution in the tubes. These baffles provide a stabilising effect for the support means and extra comfort. A typical tube is 10.1cm (4 inches) in diameter and weighs (when filled) 6kg.

Further support means can be provided on top of the cylinders for example in the form of a quilted heat retaining top blanket 71 preferably with metallised surface(s). This further support means serves to flatten the curvature of the cylinders for the purpose of providing extra comfort and support to the patient.

The entire structure can be provided with additional covering means 72. This covering means can be in the form of a washable plastic cover similar to the cover described in the first embodiment.

A cage structure is shown at Figure 5. The cage is provided with floor 101 sidewalls 102 front wall 103 and back wall 104 and roof 105. Floor 101 is solid or constructed as the side walls and supports the base of the water bed structure but the use of a separate base in the cage could be avoided by interconnection between the water bed base and the walls of the cage construction. Walls 102, 103 and 104 are formed of frame members 106 with bars 107 extending between them but other conventional cage structures can be employed. The cage is "lead free" and the bars are formed from hardened enamel or stainless steel. Roof 105 can be constructed similarly to the walls. The wall members can be attached to each other and the floor in such a way that they can be detached or hinged when the cage is not in use so that the cage structure can be collapsed and stored conveniently.

In use the roof 105 can be separately removable from the wall members. The roof can be attached to the wall members in such a way that in use it can be completely lifted away for easy access to the patient. Alternatively hinges can be provided along one edge.

The device and cage can be of such a size to provide post-operative recovery for a largish animal for example a dog. In one preferred embodiment the dimensions of the cage are 900mm (36 inches) width, 700mm (20 inches) height, and 650mm (26 inches) depth. In a preferred embodiment the cage when not in use collapses down to 125mm (5 inches) in height for storage. As mentioned in a preferred embodiment the cage can accommodate a largish animal. However, a small size cage can also be used in a cage within a larger cage set up if it were desired to accommodate smaller animals.

To facilitate access to the cage the side walls can be provided with inner separately operable or removable portions or windows 108, 109. Preferably each openable portion or window piece extends over a major part of a wall for ease of access. The portions or window pieces can be individually dimensioned to any size to allow appropriate access. Each operable portion or window piece can be attached to a side wall in such a way that the whole portion or window piece can be removed. Alternatively the portion or window piece can be attached to the wall by hinges and appropriate locking means (not shown).

Ancillary equipment can be attached to the cage for example thermo-static controls 110, saline drips and record cards or books 117. A salin drip holder 112 is provided with a storage position 113 when not in use.

An inner sleeve 120 is shown in Figure 5. This sleeve can have top and side portions which extend over the respective top and front portions of the side and back walls of the cage and which taper downwardly and inwardly along the outside of the cage. Attachment means are provided as shown at 121 and 122.

As shown in Figure 4 the front and side portions of the base are provided with lips 64 to allow dripping into a container below the cage. As shown in Figure 5 corresponding gaps for example horizontal slits 114 in the respective walls of the cage allow the lips to extend through the wall portions.

Preferably the cage can sit on a trolley to facilitate movement within the veterinary premises. The trolley can provide the base for the cage or can be a separate base with side edges extending a short way upwardly but not high enough to obscure visibility into the cage. Preferably the trolley is provided with lockable wheels for safety.

## Claims

1. A veterinary treatment device comprising a rigid planar base (10,61) and a heatable liquid filled bed structure (13,14,62,76) disposed over the base.

2. A device according to claim 1 wherein the liquid filled bed structure comprises two or more tubular elements (62) with flexible walls disposed parallel to each other over a planar heating element (62).

3. A device according to claim 2 wherein each tubular element (76) contains at least one baffle member (79) extending longitudinally along the tube.

4. A device according to either of claims 2 or 3 wherein the heating element is provided with a thermostat.

5. A device according to any one of claims 1 to 4 wherein a heat retaining blanket (79) is provided over the liquid filled bed structure.

6. A device according to any one of claims 1 to 5 in which resilient members (16,65) are disposed along the sides of the base.

7. A device according to any one of claims 1 to 6 wherein the base is mounted within a surrounding cage structure.

8. A device according to any one of claims 5 to 7 wherein a cover (18) is provided over the base, tubular elements and blanket.

9. A device according to claim 8 wherein a cover (81) is provided supported by the walls of the cage to provide a patient cradle.

10. A device according to any one of claims 7 to 9 in which horizontal slots 111 are provided on the cage walls for the lips of the base member.

11. A veterinary treatment device for small animals comprising a base, front, back and side and roof members of cage construction being foldable or collapsible at least one of said walls having an operable portion to allow access to the cage, a heating element in said base, two or more liquid filled flexible tubes disposed over said base to lie parallel to each other.
